# EUROPEAN PATENT APPLICATION

(11) **EP 4 531 467 A1**
(43) Date of publication of application: **02.04.2025**
(21) Application number: 22943028.5
(22) Date of filing: 23.05.2022
(51) Int. Cl.: H04W 52/02

(54) **MONITORING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2022/094550
(87) International publication number: WO 2023/225822

(57) **Abstract**

A monitoring method, which is performed by a first access network device. The method comprises: sending configuration information of a first type of power saving signal to a terminal, wherein the configuration information is used by the terminal in a radio resource control (RRC) non-connected state to monitor the first type of power saving signal. Compared to a circumstance in which how to monitor a power saving signal is unclear, a monitoring mechanism for monitoring the power saving signal is improved, thus improving the reliability of monitoring the power saving signal.

## Description

### TECHNICAL FIELD

The present disclosure relates to the field of wireless communication technology, but is not limited to the field of wireless communication technology, and in particular to a monitoring method, apparatus, communication device, and storage medium.

### BACKGROUND

In wireless communication technology, for the purpose of power saving, a wakeup signal (WUS) is introduced for the Radio Resource Control (RRC) connected state. For the RRC idle state, a power saving signal, namely the Paging Early Indication (PEI), is introduced. Regardless of the scenarios, the terminal needs to monitor the wakeup signal or the power saving signal through a radio frequency module. In the related technology, how to monitor the wakeup signal or the power saving signal is a problem that needs to be considered.

### SUMMARY

Embodiments of the present disclosure provide a monitoring method, apparatus, communication device, and storage medium.

According to a first aspect of embodiments of the present disclosure, a monitoring method is provided. The method is performed by a first access network device, and the method includes:
sending configuration information for a first type of power saving signal to a terminal, where the configuration information is used for the terminal in a Radio Resource Control (RRC) non-connected state to monitor the first type of power saving signal.

In an embodiment, the method further includes:
receiving auxiliary information sent by the terminal, wherein
the auxiliary information indicates terminal capability; and
the auxiliary information is used for determining the configuration information.

In an embodiment, the auxiliary information includes at least one of: information about whether the terminal supports the first type of power saving signal or not; or
offset information supported by the terminal, where the offset information indicates an offset value between a time for monitoring the first type of power saving signal and a predefined monitoring time.

In an embodiment, receiving the auxiliary information sent by the terminal includes:
receiving the auxiliary information sent through a terminal capability message; or
receiving the auxiliary information sent through an Uplink Auxiliary Information (UAI) message.

In an embodiment, the method further includes:
sending the auxiliary information to a core network.

In an embodiment, sending the auxiliary information to the core network includes:
sending the auxiliary information to the core network through a release message for releasing the terminal; or
sending the auxiliary information to the core network through a notification message about terminal capability information.

In an embodiment, the method further includes:
receiving the auxiliary information sent by the core network.

In an embodiment, receiving the auxiliary information sent by the core network includes:
receiving the auxiliary information sent by the core network through a paging message; or
receiving the auxiliary information sent by the core network through a terminal context message.

In an embodiment, the method further includes:
sending the auxiliary information to a second access network device.

In an embodiment, sending the auxiliary information to the second access network device includes:
sending the auxiliary information to the second access network device through a terminal context message.

In an embodiment, the method further includes:
determining the configuration information,
where the configuration information includes offset information for the terminal, and the offset information indicates at least one offset value between a time for the terminal to monitor the first type of power saving signal and a predefined monitoring time.

In an embodiment, the predefined monitoring time includes a time for monitoring a second type of power saving signal and/or a time for monitoring paging data.

In an embodiment, the offset value configured for the first type of power saving signal is different from the offset value configured for the second type of power saving signal.

According to a second aspect of embodiments of the present disclosure, a monitoring method is provided. The method is performed by a terminal, and the method includes:
receiving configuration information for a first type of power saving signal sent by a first access network device,
where the configuration information is used for the terminal in a Radio Resource Control (RRC) non-connected state to monitor the first type of power saving signal.

In an embodiment, the method further includes:
sending auxiliary information to the first access network device,
where the auxiliary information indicates terminal capability, and the auxiliary information is used for determining the configuration information.

In an embodiment, the auxiliary information includes at least one of:
information about whether the terminal supports the first type of power saving signal or not; or
offset information supported by the terminal, where the offset information indicates an offset value between a time for monitoring the first type of power saving signal and a predefined monitoring time.

In an embodiment, sending the auxiliary information to the first access network device includes:
sending the auxiliary information to the first access network device through a terminal capability message; or
sending the auxiliary information to the first access network device through an Uplink Auxiliary Information (UAI) message.

In an embodiment, the configuration information includes offset information for the terminal, and the offset information indicates at least one offset value between a time for the terminal to monitor the first type of power saving signal and a predefined monitoring time.

In an embodiment, the predefined monitoring time includes a time for monitoring a second type of power saving signal and/or a time for monitoring paging data.

In an embodiment, the offset information indicates a first offset value, and the method further includes:
monitoring the first type of power saving signal based on the offset value indicated by the configuration information; or
in response to the offset value supported by the terminal being less than or equal to the first offset value, monitoring the first type of power saving signal based on the first offset value; or
in response to the offset value supported by the terminal being greater than the first offset value, monitoring a second type of power saving signal based on the offset value configured for the second type of power saving signal; or
in response to the offset value supported by the terminal being greater than the first offset value, monitoring downlink data.

In an embodiment, the offset information indicates a first offset value and a second offset value, the first offset value is less than or equal to the second offset value, and the method further comprises:
in response to the offset value supported by the terminal being equal to the first offset value, monitoring the first type of power saving signal based on the first offset value; or
in response to the offset value supported by the terminal being equal to the second offset value, monitoring the first type of power saving signal based on the second offset value; or
in response to the offset value supported by the terminal being less than the first offset value, monitoring the first type of power saving signal based on the first offset value; or
in response to the offset value supported by the terminal being greater than the first offset value and less than the second offset value, monitoring the first type of power saving signal based on the second offset value; or
in response to the offset value supported by the terminal being greater than the first offset value and less than the second offset value, monitoring the second type of power saving signal based on the offset value configured for the second type of power saving signal; or
in response to the offset value supported by the terminal being greater than the first offset value and less than the second offset value, monitoring downlink data; or
in response to the offset value supported by the terminal being greater than the second offset value, monitoring the first type of power saving signal based on the first offset value; or
in response to the offset value supported by the terminal being greater than the second offset value, monitoring the second type of power saving signal based on the offset value configured for the second type of power saving signal; or
in response to the offset value supported by the terminal being greater than the second offset value, monitoring the downlink data.

In an embodiment, the offset value configured for the first type of power saving signal is different from the offset value configured for the second type of power saving signal.

In an embodiment, the method further includes:
in response to the terminal being in a predetermined cell, monitoring the first type of power saving signal; or
in response to a paging cycle being greater than a cycle threshold, monitoring the first type of power saving signal.

According to a third aspect of embodiments of the present disclosure, a monitoring apparatus is provided. The monitoring apparatus includes:
a sending module, configured to send configuration information for a first type of power saving signal to a terminal,
where the configuration information is used for the terminal in a Radio Resource Control (RRC) non-connected state to monitor the first type of power saving signal.

According to a fourth aspect of embodiments of the present disclosure, a monitoring apparatus is provided. The monitoring apparatus includes:
a receiving module, configured to receive configuration information for a first type of power saving signal sent by a first access network device,
where the configuration information is used for a terminal in a Radio Resource Control (RRC) non-connected state to monitor the first type of power saving signal.

According to a fifth aspect of embodiments of the present disclosure, a communication device is provided. The communication device includes:
a processor; and
a memory, configured to store executable instructions for the processor,
where the processor is configured to implement the method described in any embodiment of the present disclosure when running the executable instructions.

According to a sixth aspect of embodiments of the present disclosure, a computer storage medium is provided. The computer storage medium has a computer executable program stored thereon, and the executable program implements the method described in any embodiment of the present disclosure when being executed by a processor.

In an embodiment of the present disclosure, configuration information for a first type of power saving signal is sent to a terminal. The configuration information is used for the terminal in a Radio Resource Control (RRC) non-connected state to monitor the first type of power saving signal. Here, the access network device sends the configuration information for the first type of power saving signal to the terminal. Thus, after receiving the configuration information, the terminal can monitor the first type of power saving signal in the RRC non-connected state based on the configuration information. Compared with the situation where it is unclear how to monitor the power saving signal, the monitoring mechanism for monitoring the power saving signal is improved, and the reliability in monitoring the power saving signal is improved.

### BRIEF DESCRIPTION OF THE DRAWINGS

FIG. 1 is a schematic structural diagram of a wireless communication system according to an example embodiment.
FIG. 2 is a schematic diagram of a flow chart of a monitoring method according to an example embodiment.
FIG. 3 is a schematic diagram of a flow chart of a monitoring method according to an example embodiment.
FIG. 4 is a schematic diagram of a flow chart of a monitoring method according to an example embodiment.
FIG. 5 is a schematic diagram of a flow chart of a monitoring method according to an example embodiment.
FIG. 6 is a schematic diagram of a flow chart of a monitoring method according to an example embodiment.
FIG. 7 is a schematic diagram of a flow chart of a monitoring method according to an example embodiment.
FIG. 8 is a schematic diagram of a flow chart of a monitoring method according to an example embodiment.
FIG. 9 is a schematic diagram of a flow chart of a monitoring method according to an example embodiment.
FIG. 10 is a schematic diagram of a flow chart of a monitoring method according to an example embodiment.
FIG. 11 is a schematic diagram of a flow chart of a monitoring method according to an example embodiment.
FIG. 12 is a schematic diagram of a flow chart of a monitoring method according to an example embodiment.
FIG. 13 is a schematic diagram of a monitoring apparatus according to an example embodiment.
FIG. 14 is a schematic diagram of a monitoring apparatus according to an example embodiment.
FIG. 15 is a schematic structural diagram of a terminal according to an example embodiment.
FIG. 16 is a block diagram of a base station according to an example embodiment.

### DETAILED DESCRIPTION OF THE EMBODIMENTS

Here, example embodiments will be described in detail, instances of which are shown in the accompanying drawings. When the following description refers to the drawings, unless otherwise indicated, the same numbers in different drawings represent the same or similar elements. The implementations described in the following example embodiments do not represent all the implementations consistent with the embodiments of the present disclosure. Instead, they are only examples of apparatus and methods consistent with some aspects of the embodiments of the present disclosure as detailed in the attached claims.

The terms used in the embodiments of the present disclosure are only for the purpose of describing specific embodiments, and are not intended to limit the embodiments of the present disclosure. The singular forms "one" and "the" used in the embodiments of the present disclosure and the attached claims are also intended to include the plural forms, unless the context clearly indicates other meanings. It should also be understood that the term "and/or" used herein refers to and includes any or all possible combinations of one or more associated items as listed.

It should be understood that although the terms first, second, third, etc. may be used in the embodiments of the present disclosure to describe various information, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "at the time of" or "when" or "in response to determining".

For the purpose of simplicity and ease of understanding, the terms used in the present applicatioon to characterize the size relationship are "greater than" or "less than". However, for those skilled in the art, it can be understood that the term "greater than" also covers the meaning of "greater than or equal to", and "less than" also covers the meaning of "less than or equal to".

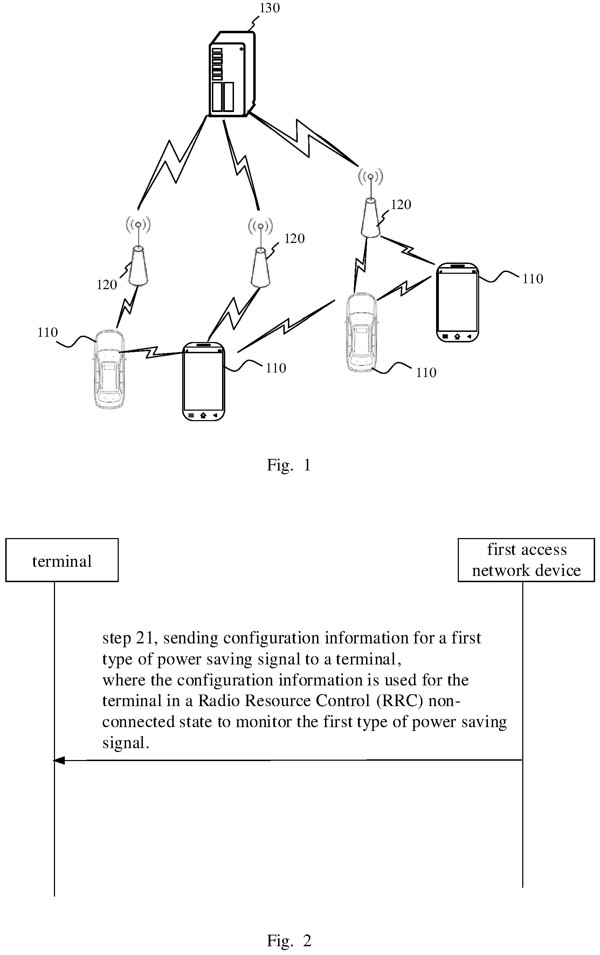

Reference may be made to FIG. 1, which shows a schematic structural diagram of a wireless communication system provided by an embodiment of the present disclosure. As shown in FIG. 1, the wireless communication system is a communication system based on mobile communication technology. The wireless communication system may include: a number of user devices 110 and a number of base stations 120.

The user device 110 may be a device that provides voice and/or data connectivity to a user. The user device 110 may communicate with one or more core networks via a Radio Access Network (RAN). The user device 110 may be an Internet of Things user device, such as a sensor device, a mobile phone, and a computer with an Internet of Things user device. For example, it may be a fixed, portable, pocket-sized, handheld, computer-built-in, or vehicle-mounted device. For example, it may be a station (STA), subscriber unit, subscriber station, mobile station, mobile, remote station, access point, remote terminal, access terminal, user terminal, user agent, user device, or user equipment. Alternatively, the user device 110 may also be a device for an unmanned aerial vehicle. Alternatively, the user device 110 may also be a vehicle-mounted device, such as a driving computer with wireless communication function, or a wireless user device connected to an external driving computer. Alternatively, the user device 110 may also be a roadside device, such as a street lamp, signal lamp, or other roadside device with wireless communication function.

The base station 120 may be a network-side device in a wireless communication system. The wireless communication system may be a 4th generation mobile communication technology (4G) system, also known as a Long Term Evolution (LTE) system. Alternatively, the wireless communication system may be a 5G system, also known as a new air interface system or a 5G NR system. Alternatively, the wireless communication system may be a next generation system of the 5G system. The access network in the 5G system may be referred to as New Generation-Radio Access Network (NG-RAN).

The base station 120 may be an evolved base station (eNB) used in a 4G system. Alternatively, the base station 120 may also be a base station (gNB) using a centralized distributed architecture in a 5G system. When the base station 120 uses a centralized distributed architecture, it generally includes a central unit (CU) and at least two distributed units (DUs). The centralized unit is provided with a protocol stack of a Packet Data Convergence Protocol (PDCP) layer, a Radio Link Control (RLC) layer, and a Media Access Control (MAC) layer. The distributed unit is provided with a physical (PHY) layer protocol stack. The specific implementations of the base station 120 are not limited in the embodiments of the present disclosure.

A wireless connection may be established between the base station 120 and the user device 110 through a wireless air interface. In different implementations, the wireless air interface is a wireless air interface based on the fourth generation mobile communication network technology (4G) standard. Alternatively, the wireless air interface is a wireless air interface based on the fifth generation mobile communication network technology (5G) standard. For example, the wireless air interface is a new air interface. Alternatively, the wireless air interface may also be a wireless air interface based on the next generation mobile communication network technology standard of 5G.

In some embodiments, an End to End (E2E) connection may also be established between the user devices 110. For example, it may be vehicle to vehicle (V2V) communication, vehicle to infrastructure (V2I) communication, and vehicle to pedestrian (V2P) communication in vehicle to everything (V2X) communication.

Here, the user device may be considered as the terminal device in the following embodiments.

In some embodiments, the wireless communication system may also include a network management device 130.

Several base stations 120 are respectively connected to the network management device 130. The network management device 130 may be a core network device in the wireless communication system. For example, the network management device 130 may be a Mobility Management Entity (MME) in the Evolved Packet Core (EPC). Alternatively, the network management device may also be other core network devices, such as a Serving GateWay (SGW), a Public Data Network GateWay (PGW), a Policy and Charging Rules Function (PCRF), or a Home Subscriber Server (HSS). The embodiments of the present disclosure do not limit the implementation forms of the network management device 130.

In order to facilitate the understanding of those skilled in the art, the embodiments of the present disclosure list multiple implementations to clearly illustrate the technical solutions in the embodiments of the present disclosure. Those skilled in the art can understand that the multiple embodiments provided in the present disclosure can be performed separately, or can be performed together with the methods in other embodiments of the present disclosure, or can be performed separately or in combination with some methods in other related technologies, and the embodiments of the present disclosure are not limited in this regard.

In order to better understand the technical solutions described in any embodiment of the present disclosure, the application scenario in the relevant technology is firstly explained.

In an embodiment, for the RRC connected state, a power saving signal, that is, a wakeup signal (WUS) or downlink control information for power saving (DCP, DCI for powersaving) is introduced. The WUS signal is a low-power detection signal. If the terminal detects the WUS signal, it means that monitoring needs to be performed for the physical downlink control channel (PDCCH) . But if the WUS is not detected, the PDCCH monitoring is skipped.

In an embodiment, for the RRC idle state, the power saving signal (for example, PEI) is usually configured before the Paging Occasion (PO). If the terminal does not detect the power saving signal, it is necessary to skip the paging DCI; otherwise, it is necessary to monitor the paging DCI.

In an embodiment, the RRC connected state is enhanced and a PDCCH skipping mechanism is introduced. That is, PDCCH skipping will be carried in DCI to notify the terminal to skip a period of monitoring or switch the search space group.

It should be noted that no matter what kind of power saving signal, a terminal modem is required to monitor the power saving signal at this time.

In an embodiment, a separate transceiver (ultra-low power wake-up receiver) is introduced to receive the power saving signal, and the modem part or the main radio part of the terminal can only wake up after the separate transceiver wakes up; otherwise, the modem part will remain in a sleeping state.

As shown in FIG. 2, a monitoring method is provided in an embodiment. The method is performed by a first access network device, and the method includes:
step 21, sending configuration information for a first type of power saving signal to a terminal.

The configuration information is used for the terminal in a Radio Resource Control (RRC) non-connected state to monitor the first type of power saving signal.

Here, the terminal involved in the present disclosure may be, but is not limited to, a mobile phone, a wearable device, a vehicle-mounted terminal, a Road Side Unit (RSU), a smart home terminal, an industrial sensor device and/or a medical device, etc. In some embodiments, the terminal may be a Redcap terminal or a predetermined version of new air interface NR terminal (for example, an NR terminal of R17). A first transceiver and a second transceiver may be provided in the terminal. The transmission power of the first transceiver is less than the transmission power of the second transceiver. The first transceiver may be a separate transceiver (ultra-low power wake-up receiver). The second transceiver may be a main radio receiver (main radio). The terminal may be based on the first transceiver to monitor the power saving signal. The power saving signal may be a low power wake-up signal (Low power WUS), which is used for waking up the second transceiver. The terminal in the present disclosure may be a terminal in an RRC non-connected state. The RRC non-connected state includes an RRC idle state and an RRC inactive state.

The access network device involved in the present disclosure may be a base station, for example, a base station of a fifth generation mobile communication (5G) network or other evolved base stations.

In an embodiment, the first type of power saving signal may be a power saving signal different from PEI. Here, PEI may correspond to the second type of power saving signal in the present disclosure.

In an embodiment, configuration information for the first type of power saving signal is sent to the terminal. The configuration information is used for the terminal in a Radio Resource Control (RRC) non-connected to monitor the first type of power saving signal. The configuration information includes offset information for the terminal. The offset information indicates at least one offset value between a time for the terminal to monitor the first type of power saving signal and a predefined monitoring time. Here, the predefined monitoring time includes a time for monitoring the second type of power saving signal and/or a time for monitoring paging data.

In an embodiment, the configuration information is determined. The configuration information for the first type of power saving signal is sent to the terminal. The configuration information is used for the terminal in a Radio Resource Control (RRC) non-connected state to monitor the first type of power saving signal.

In an embodiment, the configuration information is determined based on terminal capability, and the configuration information for the first type of power saving signal is sent to the terminal. The configuration information is used for the terminal in a Radio Resource Control (RRC) non-connected state to monitor the first type of power saving signal.

In an embodiment, auxiliary information sent by the terminal is received, where the auxiliary information indicates terminal capability, and the auxiliary information is used for determining the configuration information. Based on the terminal capability indicated by the auxiliary information, the configuration information is determined, and the configuration information for the first type of power saving signal is sent to the terminal. The configuration information is used for the terminal in the Radio Resource Control (RRC) non-connected state to monitor the first type of power saving signal.

In an embodiment, the auxiliary information includes at least one of the following:
information about whether the terminal supports the first type of power saving signal or not; or
offset information supported by the terminal, where the offset information indicates an offset value between a time for monitoring the first type of power saving signal and a predefined monitoring time, and the predefined monitoring time includes a time for monitoring the second type of power saving signal and/or a time for monitoring the paging data.

In an embodiment, the auxiliary information sent through the terminal capability message is received. The auxiliary information is used for determining the configuration information. Based on the terminal capability indicated by the auxiliary information, the configuration information is determined, and the configuration information for the first type of power saving signal is sent to the termina. The configuration information is used for the terminal in the Radio Resource Control (RRC) non-connected state to monitor the first type of power saving signal.

In an embodiment, the auxiliary information sent by the uplink auxiliary information (UAI) message is received. The auxiliary information is used for determining the configuration information. Based on the terminal capability indicated by the auxiliary information, the configuration information is determined, and the configuration information for the first type of power saving signal is sent to the terminal. The configuration information is used for the terminal in the radio resource control (RRC) non-connected state to monitor the first type of power saving signal.

In an embodiment, auxiliary information sent by the terminal is received, wherein the auxiliary information indicates terminal capability, and the auxiliary information is used for determining the configuration information. The auxiliary information is sent to the core network. The auxiliary information sent by the core network is received. Based on the terminal capability indicated by the received auxiliary information sent by the core network, the configuration information is determined, and the configuration information for the first type of power saving signal is sent to the terminal. The configuration information is used for the terminal in the radio resource control (RRC) non-connected state to monitor the first type of power saving signal.

In an embodiment, the auxiliary information may be sent to the core network through a release message for releasing the terminal. Alternatively, the auxiliary information may be sent to the core network through a notification message about terminal capability information. The notification message about terminal capability information may be a terminal radio capability information indication (UE RADIO CAPABILITY INFO INDICATION) message.

In an embodiment, the auxiliary information sent by the core network is received through a paging message. Alternatively, the auxiliary information sent by the core network is received through a terminal context message. In an embodiment, the auxiliary information sent by the core network is received through INITIAL CONTEXT SETUP REQUEST.

In an embodiment, the auxiliary information sent by the terminal is received, where the auxiliary information indicates the terminal capability, and the auxiliary information is used for determining the configuration information. The auxiliary information is sent to a second access network device.

In an embodiment, the auxiliary information is sent to the second access network device through a radio paging message. Alternatively, the auxiliary information is sent to the second access network device through a terminal context message.

In an embodiment, the configuration information is determined. The configuration information includes offset information for the terminal, and the offset information indicates at least one offset value between the time for the terminal to monitor the first type of power saving signal and the predefined monitoring time. The configuration information for the first type of power saving signal is sent to the terminal. The configuration information is used for the terminal in the radio resource control (RRC) non-connected state to monitor the first type of power saving signal. In an embodiment, the predefined monitoring time includes the time for monitoring the second type of power saving signal and/or the time for monitoring the paging data.

In an embodiment, the configuration information is determined. The configuration information includes offset information for the terminal. The offset information indicates at least one offset value between the time for the terminal to monitor the first type of power saving signal and the predefined monitoring time. The offset value configured for the first type of power saving signal is different from the offset value configured for the second type of power saving signal. The configuration information for the first type of power saving signal is sent to the terminal. The configuration information is used for the terminal in the radio resource control (RRC) non-connected state to monitor the first type of power saving signal. In an embodiment, the predefined monitoring time includes the time for monitoring the second type of power saving signal and/or the time for monitoring the paging data.

In an embodiment, the configuration information for the first type of power saving signal is sent to the terminal. The configuration information is used for the terminal in the radio resource control (RRC) non-connected state to monitor the first type of power saving signal. The configuration information includes the offset information for the terminal. The offset information indicates a first offset value between the time for the terminal to monitor the first type of power saving signal and the predefined monitoring time. After receiving the configuration information, the terminal monitors the first type of power saving signal based on the offset value indicated by the configuration information. Alternatively, in response to the offset value supported by the terminal being less than or equal to the first offset value, the terminal monitors the first type of power saving signal based on the first offset value. Alternatively, in response to the offset value supported by the terminal being greater than the first offset value, the terminal monitors the second type of power saving signal based on the offset value configured for the second type of power saving signal. Alternatively, in response to the offset value supported by the terminal being greater than the first offset value, the terminal monitors downlink data. Here, the terminal monitoring downlink data may be that the terminal directly or always monitors the downlink data.

In an embodiment, the configuration information for the first type of power saving signal is sent to the terminal. The configuration information is used for the terminal in a radio resource control (RRC) non-connected state to monitor the first type of power saving signal. The configuration information includes offset information for the terminal. The offset information indicates a first offset value and a second offset value between a time for the terminal to monitor the first type of power saving signal and a predefined monitoring time, and the first offset value is less than or equal to the second offset value. After receiving the configuration information, and in response to the offset value supported by the terminal being equal to the first offset value, the terminal monitors the first type of power saving signal based on the first offset value. Alternatively, in response to the offset value supported by the terminal being equal to the second offset value, the terminal monitors the first type of power saving signal based on the second offset value. Alternatively, in response to the offset value supported by the terminal being less than the first offset value, the terminal monitors the first type of power saving signal based on the first offset value. Alternatively, in response to the offset value supported by the terminal being greater than the first offset value and less than the second offset value, the terminal monitors the first type of power saving signal based on the second offset value. Alternatively, in response to the offset value supported by the terminal being greater than the first offset value and is less than the second offset value, the terminal monitors the second type of power saving signal based on the offset value configured for the second type of power saving signal. Alternatively, in response to the offset value supported by the terminal being greater than the first offset value and less than the second offset value, the terminal monitors downlink data. Alternatively, in response to the offset value supported by the terminal being greater than the second offset value, the terminal monitors the first type of power saving signal based on the first offset value. Alternatively, in response to the offset value supported by the terminal being greater than the second offset value, the terminal monitors the second type of power saving signal based on the offset value configured for the second type of power saving signal. Alternatively, in response to the offset value supported by the terminal being greater than the second offset value, the terminal monitors the downlink data.

In the embodiments of the present disclosure, configuration information for the first type of power saving signal is sent to the terminal. The configuration information is used for the terminal in the radio resource control (RRC) non-connected state to monitor the first type of power saving signal. Here, the access network device sends the configuration information for the first type of power saving signal to the terminal. Thus, after receiving the configuration information, the terminal can monitor the first type of power saving signal in the RRC non-connected state based on the configuration information. Compared with the situation where it is unclear how to monitor the power saving signal, the monitoring mechanism for monitoring the power saving signal is improved, and the reliability in monitoring the power saving signal is improved.

It should be noted, those skilled in the art can understand that the methods provided in the embodiments of the present disclosure may be performed alone or together with some methods in the embodiments of the present disclosure or some methods in related technologies.

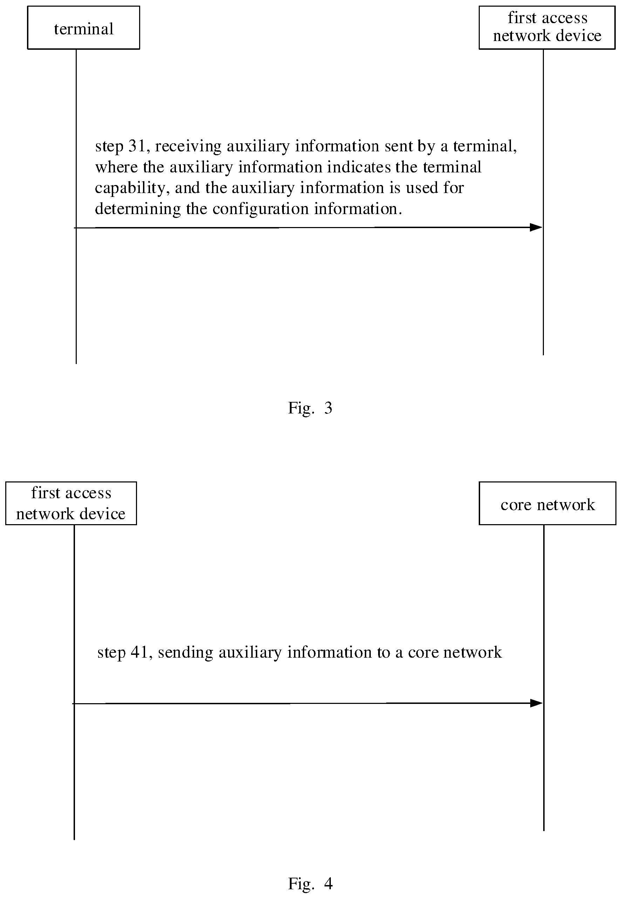

As shown in FIG. 3, a monitoring method is provided in an embodiment of the present disclosure. The method is performed by a first access network device, and the method includes:
step 31, receiving auxiliary information sent by a terminal.

The auxiliary information indicates the terminal capability, and the auxiliary information is used for determining the configuration information.

In an embodiment, the auxiliary information includes at least one of the following:
information about whether the terminal supports the first type of power saving signal or not; or
offset information supported by the terminal, where the offset information indicates an offset value between the time for monitoring the first type of power saving signal and the predefined monitoring moment, and the predefined monitoring moment includes the time for monitoring the second type of power saving signal and/or the time for monitoring the paging data.

In an embodiment, the first access network device may also determine the offset information supported by the terminal according to a predefined protocol. For example, the auxiliary information includes information that the terminal supports the first type of power saving signal. In response to the first access network device determining that the terminal supports the first type of power saving signal based on the auxiliary information, the first access network device determines the offset information supported by the terminal according to the predefined communication protocol. In an embodiment, the offset value may be 1 second, 2 seconds, or 4 seconds.

It should be noted that after the terminal wakes up because of the power saving signal and a time length corresponding to the offset value has passed, the second transceiver of the terminal may be used to synchronize with the network in the time and frequency domain and/or to monitor data.

In an embodiment, the auxiliary information sent by the terminal is received, where the auxiliary information indicates the terminal capability, and the auxiliary information is used for determining the configuration information. Based on the terminal capability indicated by the auxiliary information, the configuration information is determined, and the configuration information for the first type of power saving signal is sent to the terminal. The configuration information is used for the terminal in the radio resource control (RRC) non-connected state to monitor the first type of power saving signal.

It should be noted, those skilled in the art can understand that the methods provided in the embodiments of the present disclosure may be performed alone or together with some methods in the embodiments of the present disclosure or some methods in related technologies.

As shown in FIG. 4, a monitoring method is provided in an embodiment of the present disclosure. The method is performed by a first access network device, and the method includes:
step 41, sending auxiliary information to a core network.

In an embodiment, the auxiliary information includes at least one of the following:
information about whether the terminal supports the first type of power saving signal or not; or
offset information supported by the terminal, where the offset information indicates an offset value between the time for monitoring the first type of power saving signal and a predefined monitoring time, and the predefined monitoring time includes the time for monitoring the second type of power saving signal and/or the time for monitoring the paging data.

In an embodiment, the auxiliary information sent by the terminal is received, where the auxiliary information indicates the terminal capability, and the auxiliary information is used for determining the configuration information. The auxiliary information is sent to the core network. The auxiliary information sent by the core network is received. The configuration information is determined based on the terminal capability indicated by the received auxiliary information sent by the core network. The configuration information for the first type of power saving signal is sent to the terminal. The configuration information is used for the terminal in the radio resource control (RRC) non-connected state to monitor the first type of power saving signal.

It should be noted that the auxiliary information sent by the core network and received by the first access network device may be the auxiliary information sent by the first access network device to the core network device, and the two are the same auxiliary information. It shall be noted that the auxiliary information sent by the core network and received by the first access network device may also be information determined based on the auxiliary information sent by the first access network device to the core network device, and the two are not completely the same auxiliary information. For example, the auxiliary information sent by the first access network device to the core network device is the first auxiliary information, and the auxiliary information sent by the core network and received by the first access network device is the second auxiliary information determined based on the first auxiliary information. The first auxiliary information is different from the second auxiliary information. For example, the second auxiliary information only includes some of the offset values indicated in the first auxiliary information.

In an embodiment, in response to receiving the auxiliary information sent by the core network, the first access network device determines the configuration information based on the second auxiliary information. Alternatively, in response to receiving the auxiliary information sent by the core network, the first access network device does not determine the configuration information based on the second auxiliary information.

It should be noted, those skilled in the art can understand that the methods provided in the embodiments of the present disclosure may be performed alone or together with some methods in the embodiments of the present disclosure or some methods in related technologies.

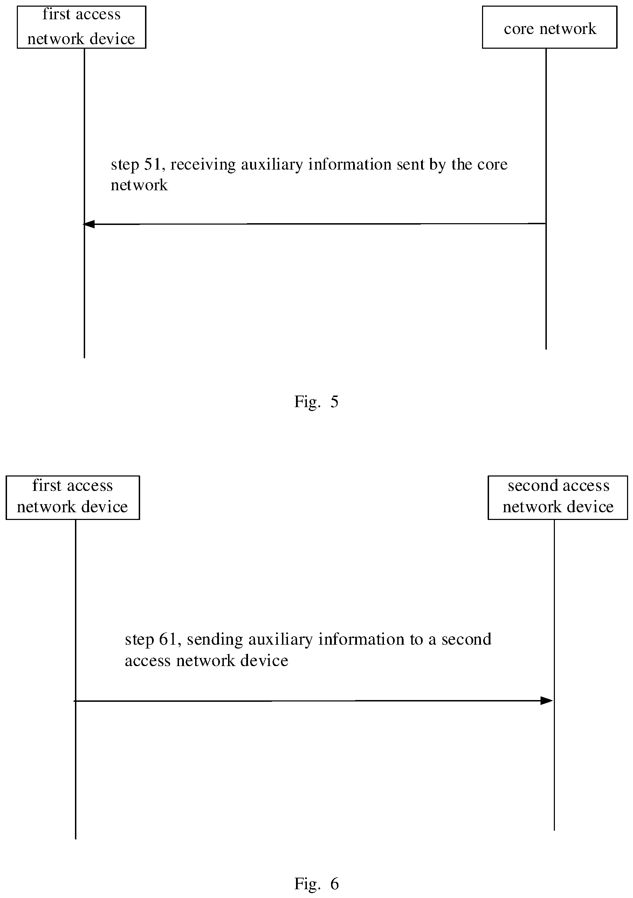

As shown in FIG. 5, a monitoring method is provided in an embodiment of the present disclosure. The method is performed by the first access network device, and the method includes:
step 51, receiving auxiliary information sent by the core network.

In an embodiment, the auxiliary information includes at least one of the following:
information about whether the terminal supports the first type of power saving signal or not; or
offset information supported by the terminal, where the offset information indicates an offset value between the time for monitoring the first type of power saving signal and a predefined monitoring time, and the predefined monitoring time includes the time for monitoring the second type of power saving signal and/or the time for monitoring the paging data.

In an embodiment, the auxiliary information sent by the terminal is received, where the auxiliary information indicates the terminal capability, and the auxiliary information is used to determine the configuration information. The auxiliary information sent by the core network is received. The configuration information is determined based on the terminal capability indicated by the received auxiliary information sent by the core network. The configuration information for the first type of power saving signal is sent to the terminal. The configuration information is used for the terminal in the radio resource control (RRC) non-connected state to monitor the first type of power saving signal.

It should be noted that the auxiliary information sent by the core network and received by the first access network device may be the auxiliary information sent by the first access network device to the core network device, and the two are the same auxiliary information. It shall be noted that the auxiliary information sent by the core network and received by the first access network device may also be information determined based on the auxiliary information sent by the first access network device to the core network device, and the two are not completely the same auxiliary information. For example, the auxiliary information sent by the first access network device to the core network device is the first auxiliary information, and the auxiliary information sent by the core network and received by the first access network device is the second auxiliary information determined based on the first auxiliary information. The first auxiliary information is different from the second auxiliary information. For example, the second auxiliary information only includes some of the offset values indicated in the first auxiliary information.

In an embodiment, in response to receiving the auxiliary information sent by the core network, the first access network device determines the configuration information based on the second auxiliary information. Alternatively, in response to receiving the auxiliary information sent by the core network, the first access network device does not determine the configuration information based on the second auxiliary information.

It should be noted, those skilled in the art can understand that the methods provided in the embodiments of the present disclosure may be performed alone or together with some methods in the embodiments of the present disclosure or some methods in related technologies.

As shown in FIG. 6, a monitoring method is provided in an embodiment of the present disclosure. The method is performed by the first access network device, and the method includes:
step 61, sending auxiliary information to a second access network device.

In an embodiment, the auxiliary information includes at least one of the following:
information about whether the terminal supports the first type of power saving signal or not; or
offset information supported by the terminal, where the offset information indicates an offset value between the time for monitoring the first type of power saving signal and a predefined monitoring time, and the predefined monitoring time includes the time for monitoring the second type of power saving signal and/or the time for monitoring the paging data.

In an embodiment, the auxiliary information sent by the terminal is received, where the auxiliary information indicates the terminal capability, and the auxiliary information is used to determine the configuration information. The auxiliary information is sent to the second access network device.

It should be noted, those skilled in the art can understand that the methods provided in the embodiments of the present disclosure may be performed alone or together with some methods in the embodiments of the present disclosure or some methods in related technologies.

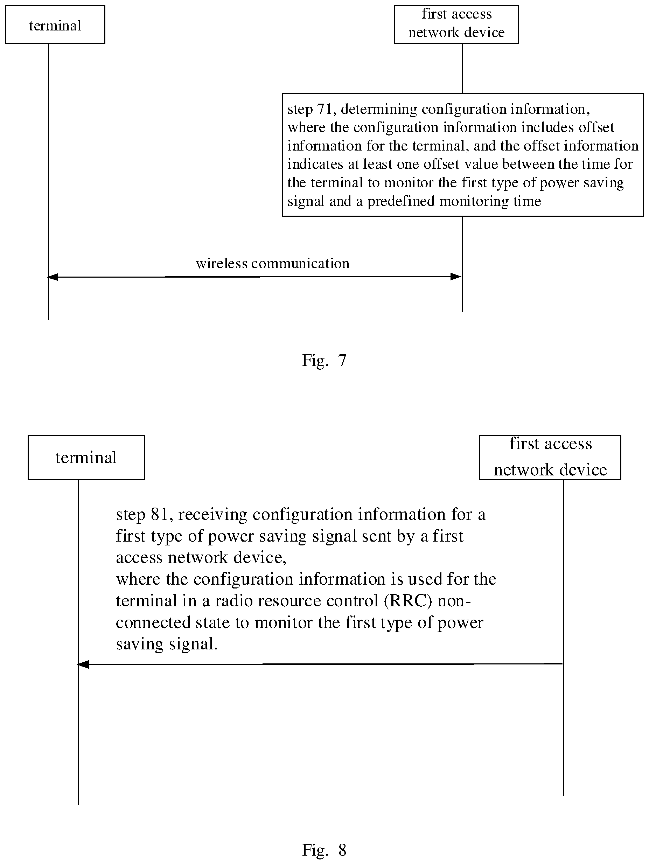

As shown in FIG. 7, a monitoring method is provided in an embodiment of the present discosure. The method is performed by a first access network device, and the method includes:
step 71, determining configuration information, where the configuration information includes offset information for the terminal, and the offset information indicates at least one offset value between the time for the terminal to monitor the first type of power saving signal and a predefined monitoring time.

In an embodiment, the configuration information is determined. The configuration information includes the offset information for the terminal. The offset information indicates at least one offset value between the time for the terminal to monitor the first type of power saving signal and the predefined monitoring time. The configuration information for a first type of power saving signal is sent to a terminal. The configuration information is used for the terminal in a Radio Resource Control (RRC) non-connected state to monitor the first type of power saving signal. In an embodiment, the predefined monitoring time includes the time for monitoring a second type of power saving signal and/or the time for monitoring paging data.

In an embodiment, the configuration information is determined. The configuration information includes offset information for the terminal. The offset information indicates at least one offset value between the time for the terminal to monitor the first type of power saving signal and the predefined monitoring time. The offset value configured for the first type of power saving signal is different from the offset value configured for the second type of power saving signal. The configuration information for the first type of power saving signal is sent to the terminal. The configuration information is used for the terminal in a radio resource control (RRC) non-connected state to monitor the first type of power saving signal. In an embodiment, the predefined monitoring time includes the time for monitoring the second type of power saving signal and/or the time for monitoring paging data.

In an embodiment of the present disclosure, the first access network device may configure the offset value between the time for monitoring the power saving signal and the predefined monitoring time, so that the terminal can determine the position for monitoring the power saving signal. In an embodiment, the predefined monitoring time includes the time for monitoring the second type of power saving signal or the time for monitoring paging data. In an embodiment, the offset value configured by the base station may be in absolute time units, for example in units of ms and slots, such as 40ms. In an embodiment, the offset value configured by the base station may correspond to the period of the synchronization signal block (SSB). For example, the offset value is N SSB periods. In this case, the first access network device only needs to send the value of N value.

It should be noted, those skilled in the art can understand that the methods provided in the embodiments of the present disclosure may be performed alone or together with some methods in the embodiments of the present disclosure or some methods in related technologies.

As shown in FIG. 8, a monitoring method is provided in an embodiment of the present disclosure. The method is performed by a terminal, and the method includes:
step 81, receiving configuration information for a first type of power saving signal sent by a first access network device.

The configuration information is used for the terminal in a radio resource control (RRC) non-connected state to monitor the first type of power saving signal.

Here, the terminal involved in the present disclosure may be, but is not limited to, a mobile phone, a wearable device, a vehicle-mounted terminal, a Road Side Unit (RSU), a smart home terminal, an industrial sensor device and/or a medical device, etc. In some embodiments, the terminal may be a Redcap terminal or a predetermined version of new air interface NR terminal (for example, an NR terminal of R17). A first transceiver and a second transceiver may be provided in the terminal. The transmission power of the first transceiver is less than the transmission power of the second transceiver. The first transceiver may be a separate transceiver (ultra-low power wake-up receiver). The second transceiver may be a main radio receiver (main radio). The terminal may monitor the power saving signal based on the first transceiver. The power saving signal may be a low power wake-up signal (Low power WUS), which is used to wake up the second transceiver. The terminal in the present disclosure may be a terminal in an RRC non-connected state. The RRC non-connected state includes an RRC idle state and an RRC inactive state.

The access network device involved in the present disclosure may be a base station, for example, a base station of a fifth generation mobile communication (5G) network or other evolved base stations.

In an embodiment, the first type of power saving signal may be a power saving signal different from PEI. Here, PEI may correspond to the second type of power saving signal in the present disclosure.

In an embodiment, configuration information for the first type of power saving signal sent by a first access network device is received. The configuration information is used for the terminal in a radio resource control (RRC) non-connected state to monitor the first type of power saving signal. The configuration information includes offset information for the terminal. The offset information indicates at least one offset value between the time for the terminal to monitor the first type of power saving signal and the predefined monitoring time. Here, the predefined monitoring time includes the time for monitoring the second type of power saving signal and/or the time for monitoring the paging data. The first type of power saving signal is monitored based on the configuration information.

In an embodiment, auxiliary information is sent to the first access network device, where the auxiliary information indicates the terminal capability, and the auxiliary information is used to determine the configuration information. Based on the terminal capability indicated by the auxiliary information, the first access network device determines the configuration information. The first access network device sends the configuration information to the terminal. The configuration information for the first type of power saving signal sent by the first access network device is received. The configuration information is used for the terminal in the radio resource control (RRC) non-connected state to monitor the first type of power saving signal. The first type of power saving signal is monitored based on the configuration information.

In an embodiment, the auxiliary information includes at least one of the following:
information about whether the terminal supports the first type of power saving signal; or
offset information supported by the terminal, where the offset information indicates the offset value between the time for monitoring the first type of power saving signal and the predefined monitoring time, and the predefined monitoring time includes the time for monitoring the second type of power saving signal and/or the time for monitoring the paging data.

In an embodiment, the auxiliary information is sent to the first access network device through a terminal capability message. The auxiliary information is used to determine the configuration information. Based on the terminal capability indicated by the auxiliary information, the first access network device determines the configuration information. The first access network device sends the configuration information to the terminal. The configuration information for the first type of power saving signal sent by the first access network device is received. The configuration information is used for the terminal in the radio resource control (RRC) non-connected state to monitor the first type of power saving signal. The first type of power saving signal is monitored based on the configuration information.

In an embodiment, the auxiliary information is sent to the first access network device through an uplink auxiliary information (UAI) message. The auxiliary information is used to determine the configuration information. Based on the terminal capability indicated by the auxiliary information, the first access network device determines the configuration information. The first access network device sends the configuration information to the terminal. The configuration information for the first type of power saving signal sent by the first access network device is received. The configuration information is used for the terminal in the radio resource control (RRC) non-connected state to monitor the first type of power saving signal. The first type of power saving signal is monitored based on the configuration information.

In an embodiment, the configuration information for the first type of power saving signal sent by the first access network device is received. The configuration information includes offset information for the terminal. The offset information indicates at least one offset value between the time for the terminal to monitor the first type of power saving signal and the predefined monitoring time. The configuration information is used for the terminal in the radio resource control (RRC) non-connected state to monitor the first type of power saving signal. In an embodiment, the predefined monitoring time includes the time for monitoring the second type of power saving signal and/or the time for monitoring the paging data.

In an embodiment, the configuration information for the first type of power saving signal sent by the first access network device is received. The configuration information includes offset information for the terminal. The offset information indicates at least one offset value between the time for the terminal to monitor the first type of power saving signal and the predefined monitoring time. The offset value configured for the first type of power saving signal is different from the offset value configured for the second type of power saving signal. The configuration information is used for the terminal in a radio resource control (RRC) non-connected state to monitor the first type of power saving signal. In an embodiment, the predefined monitoring time includes the time for monitoring the second type of power saving signal and/or the time for monitoring paging data.

In an embodiment, the configuration information for the first type of power saving signal sent by the first access network device is received. The configuration information is used for the terminal in a radio resource control (RRC) non-connected state to monitor the first type of power saving signal. The configuration information includes offset information for the terminal. The offset information indicates the first offset value between the time for the terminal to monitor the first type of power saving signal and the predefined monitoring time. After receiving the configuration information, the terminal monitors the first type of power saving signal based on the offset value indicated by the configuration information. Alternatively, in response to the offset value supported by the terminal being less than or equal to the first offset value, the terminal monitors the first type of power saving signal based on the first offset value. Alternatively, in response to the offset value supported by the terminal being greater than the first offset value, the terminal monitors the second type of power saving signal based on the offset value configured for the second type of power saving signal. Alternatively, in response to the offset value supported by the terminal being greater than the first offset value, the terminal monitors downlink data. Here, the terminal monitoring downlink data may be that the terminal directly or always monitors the downlink data.

In an embodiment, the configuration information for the first type of power saving signal sent by the first access network device is received. The configuration information is used for the terminal in a radio resource control (RRC) non-connected state to monitor the first type of power saving signal. The configuration information includes offset information for the terminal. The offset information indicates a first offset value and a second offset value between a time for the terminal to monitor the first type of power saving signal and a predefined monitoring time. The first offset value is less than or equal to the second offset value. After receiving the configuration information, in response to the offset value supported by the terminal being equal to the first offset value, the terminal monitors the first type of power saving signal based on the first offset value. Alternatively, in response to the offset value supported by the terminal being equal to the second offset value, the terminal monitors the first type of power saving signal based on the second offset value. Alternatively, in response to the offset value supported by the terminal being less than the first offset value, the terminal monitors the first type of power saving signal based on the first offset value. Alternatively, in response to the offset value supported by the terminal being greater than the first offset value and less than the second offset value, the terminal monitors the first type of power saving signal based on the second offset value. Alternatively, in response to the offset value supported by the terminal being greater than the first offset value and is less than the second offset value, the terminal monitors the second type of power saving signal based on the offset value configured for the second type of power saving signal. Alternatively, in response to the offset value supported by the terminal being greater than the first offset value and less than the second offset value, the terminal monitors downlink data. Alternatively, in response to the offset value supported by the terminal being greater than the second offset value, the terminal monitors the first type of power saving signal based on the first offset value. Alternatively, in response to the offset value supported by the terminal being greater than the second offset value, the terminal monitors the second type of power saving signal based on the offset value configured for the second type of power saving signal. Alternatively, in response to the offset value supported by the terminal being greater than the second offset value, the terminal monitors downlink data.

In an embodiment, the configuration information for the first type of power saving signal sent by the first access network device is received. The configuration information is used for the terminal in a radio resource control (RRC) non-connected state to monitor the first type of power saving signal. The configuration information includes offset information for the terminal. The offset information indicates at least one offset value between the time for the terminal to monitor the first type of power saving signal and the predefined monitoring time. Here, the predefined monitoring time includes the time for monitoring the second type of power saving signal and/or the time for monitoring the paging data. In response to the terminal being in a predetermined cell, the first type of power saving signal is monitored based on the configuration information.

In an embodiment, the configuration information for the first type of power saving signal sent by the first access network device is received. The configuration information is used for the terminal in a radio resource control (RRC) non-connected state to monitor the first type of power saving signal. The configuration information includes offset information for the terminal. The offset information indicates at least one offset value between the time for the terminal to monitor the first type of power saving signal and the predefined monitoring time. Here, the predefined monitoring time includes the time for monitoring the second type of power saving signal and/or the time for monitoring the paging data. In response to the paging cycle being greater than the cycle threshold, the first type of power saving signal is monitored based on the configuration information.

It should be noted, those skilled in the art can understand that the methods provided in the embodiments of the present disclosure may be performed alone or together with some methods in the embodiments of the present disclosure or some methods in related technologies.

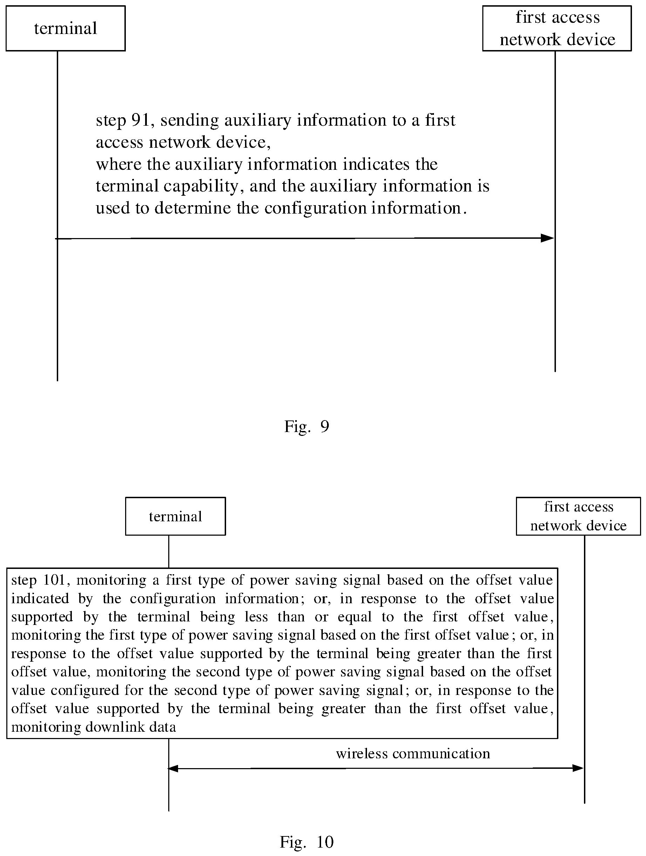

As shown in FIG. 9, a monitoring method is provided in an embodiment of the present disclosure. The method is performed by a terminal, and the method includes:
step 91, sending auxiliary information to a first access network device.

The auxiliary information indicates the terminal capability, and the auxiliary information is used to determine the configuration information.

In an embodiment, the auxiliary information includes at least one of the following:
information about whether the terminal supports the first type of power saving signal or not; or
offset information supported by the terminal, where the offset information indicates the offset value between the time for monitoring the first type of power saving signal and the predefined monitoring time, and the predefined monitoring time includes the time for monitoring the second type of power saving signal and/or the time for monitoring the paging data.

In an embodiment, the first access network device may also determine the offset information supported by the terminal according to a predefined protocol. For example, the auxiliary information includes information that the terminal supports the first type of power saving signal. In response to the first access network device determining that the terminal supports the first type of power saving signal based on the auxiliary information, the first access network device determines the offset information supported by the terminal according to the predefined communication protocol. In an embodiment, the offset value may be 1 second, 2 seconds, or 4 seconds.

It should be noted, after the terminal wakes up because of the power saving signal and the time corresponding to the offset value has passed, the second transceiver of the terminal may be used to synchronize with the network in the time and frequency domain and/or to monitor data.

In an embodiment, auxiliary information indicating the terminal capability is sent to the first access network device. The auxiliary information is used to determine the configuration information. Based on the terminal capability indicated by the auxiliary information, the first access network device determines the configuration information. The first access network device sends the configuration information for the first type of power saving signal to the terminal. The configuration information is used for the terminal in the radio resource control (RRC) non-connected state to monitor the first type of power saving signal. After receiving the configuration information, the terminal monitors the first type of power saving signal based on the configuration information.

It should be noted, those skilled in the art can understand that the methods provided in the embodiments of the present disclosure may be performed alone or together with some methods in the embodiments of the present disclosure or some methods in related technologies.

As shown in FIG. 10, a monitoring method is provided in an embodiment of the present disclosure, The method is performed by a terminal, and the offset information indicates a first offset value.

The method includes: step 101, monitoring a first type of power saving signal based on the offset value indicated by the configuration information; or, in response to the offset value supported by the terminal being less than or equal to the first offset value, monitoring the first type of power saving signal based on the first offset value; or, in response to the offset value supported by the terminal being greater than the first offset value, monitoring the second type of power saving signal based on the offset value configured for the second type of power saving signal; or, in response to the offset value supported by the terminal being greater than the first offset value, monitoring downlink data.

In an embodiment, the configuration information for the first type of power saving signal sent by the first access network device is received. The configuration information is used for the terminal in a radio resource control (RRC) non-connected state to monitor the first type of power saving signal. The configuration information includes the offset information for the terminal. The offset information indicates a first offset value between a time for the terminal to monitor the first type of power saving signal and a predefined monitoring time. After receiving the configuration information, the terminal monitors the first type of power saving signal based on the offset value indicated by the configuration information. Alternatively, in response to the offset value supported by the terminal being less than or equal to the first offset value, the terminal monitors the first type of power saving signal based on the first offset value. Alternatively, in response to the offset value supported by the terminal being greater than the first offset value, the terminal monitors the second type of power saving signal based on the offset value configured for the second type of power saving signal. Alternatively, in response to the offset value supported by the terminal being greater than the first offset value, the terminal monitors downlink data. Here, the terminal monitors downlink data may be that the terminal directly or always monitors the downlink data.

It should be noted, those skilled in the art can understand that the methods provided in the embodiments of the present disclosure may be performed alone or together with some methods in the embodiments of the present disclosure or some methods in related technologies.

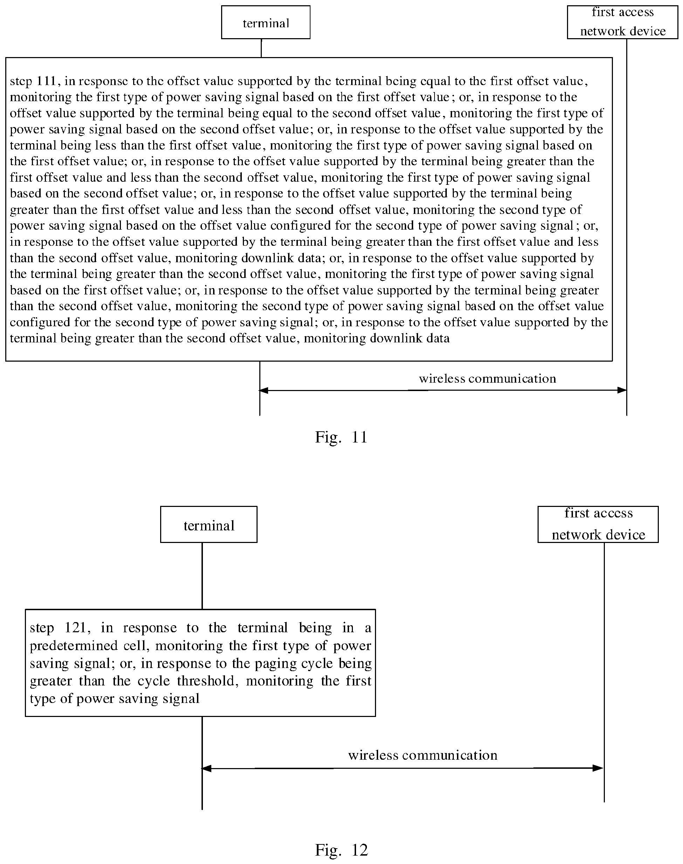

As shown in FIG. 11, a monitoring method is provided in an embodiment of the present disclosure. The method is performed by a terminal, and the offset information indicates a first offset value and a second offset value. The first offset value is less than or equal to the second offset value.

The method includes: step 111, in response to the offset value supported by the terminal being equal to the first offset value, monitoring the first type of power saving signal based on the first offset value; or, in response to the offset value supported by the terminal being equal to the second offset value, monitoring the first type of power saving signal based on the second offset value; or, in response to the offset value supported by the terminal being less than the first offset value, monitoring the first type of power saving signal based on the first offset value; or, in response to the offset value supported by the terminal being greater than the first offset value and less than the second offset value, monitoring the first type of power saving signal based on the second offset value; or, in response to the offset value supported by the terminal being greater than the first offset value and less than the second offset value, monitoring the second type of power saving signal based on the offset value configured for the second type of power saving signal; or, in response to the offset value supported by the terminal being greater than the first offset value and less than the second offset value, monitoring downlink data; or, in response to the offset value supported by the terminal being greater than the second offset value, monitoring the first type of power saving signal based on the first offset value; or, in response to the offset value supported by the terminal being greater than the second offset value, monitoring the second type of power saving signal based on the offset value configured for the second type of power saving signal; or, in response to the offset value supported by the terminal being greater than the second offset value, monitoring downlink data.

In an embodiment, the offset value for monitoring the first type of power saving signal is determined according to the offset value supported by the terminal, the first offset value, and the second offset value.

In an embodiment, the configuration information for the first type of power saving signal sent by the first access network device is received. The configuration information is used for the terminal in a radio resource control (RRC) non-connected state to monitor the first type of power saving signal. The configuration information includes offset information for the terminal. The offset information indicates a first offset value and a second offset value between a time for the terminal to monitor the first type of power saving signal and a predefined monitoring time. The first offset value is less than or equal to the second offset value. After receiving the configuration information, in response to the offset value supported by the terminal being equal to the first offset value, the terminal monitors the first type of power saving signal based on the first offset value. Alternatively, in response to the offset value supported by the terminal being equal to the second offset value, the terminal monitors the first type of power saving signal based on the second offset value. Alternatively, in response to the offset value supported by the terminal being less than the first offset value, the terminal monitors the first type of power saving signal based on the first offset value. Alternatively, in response to the offset value supported by the terminal being greater than the first offset value and less than the second offset value, the terminal monitors the first type of power saving signal based on the second offset value. Alternatively, in response to the offset value supported by the terminal being greater than the first offset value and is less than the second offset value, the terminal monitors the second type of power saving signal based on the offset value configured for the second type of power saving signal. Alternatively, in response to the offset value supported by the terminal being greater than the first offset value and less than the second offset value, the terminal monitors downlink data. Alternatively, in response to the offset value supported by the terminal being greater than the second offset value, the terminal monitors the first type of power saving signal based on the first offset value. Alternatively, in response to the offset value supported by the terminal being greater than the second offset value, the terminal monitors the second type of power saving signal based on the offset value configured for the second type of power saving signal. Alternatively, in response to the offset value supported by the terminal being greater than the second offset value, the terminal monitors downlink data.

It should be noted, those skilled in the art can understand that the methods provided in the embodiments of the present disclosure may be performed alone or together with some methods in the embodiments of the present disclosure or some methods in related technologies.

As shown in FIG. 12, a monitoring method is provided in an embodiment of the present embodiment. The method is performed by the terminal, and the method includes:
step 121, in response to the terminal being in a predetermined cell, monitoring the first type of power saving signal; or, in response to the paging cycle being greater than the cycle threshold, monitoring the first type of power saving signal.

In an embodiment, the configuration information for the first type of power saving signal sent by the first access network device is received. The configuration information is used for the terminal in a radio resource control (RRC) non-connected state to monitor the first type of power saving signal. The configuration information includes offset information for the terminal. The offset information indicates at least one offset value between the time for the terminal to monitor the first type of power saving signal and the predefined monitoring time. Here, the predefined monitoring time includes the time for monitoring the second type of power saving signal and/or the time for monitoring the paging data. In response to the terminal being in a predetermined cell, the first type of power saving signal is monitored based on the configuration information. Here, the predetermined cell may be the last used cell. For example, after the cell reselection process, the first type of monitoring signal is no longer monitored, and the first type of monitoring signal can only be monitored in the most recently released cell.

In an embodiment, the configuration information for the first type of power saving signal sent by the first access network device is received. The configuration information is used for the terminal in a radio resource control (RRC) non-connected state to monitor the first type of power saving signal. The configuration information includes offset information for the terminal. The offset information indicates at least one offset value between the time for the terminal to monitor the first type of power saving signal and the predefined monitoring time. Here, the predefined monitoring time includes the time for monitoring the second type of power saving signal and/or the time for monitoring the paging data. In response to the paging cycle being greater than the cycle threshold, the first type of power saving signal is monitored based on the configuration information.

In an embodiment, a terminal configured with enhanced discontinuous reception (eDRX) uses the first type of power saving signal. In the eDRX scenario, the first type of power saving signal is only used for monitoring the first paging occasion (PO) within the paging time window (PTW); and the second type of power saving signal is monitored at the second PO other than the first PO within the PTW.

It should be noted, those skilled in the art can understand that the methods provided in the embodiments of the present disclosure may be performed alone or together with some methods in the embodiments of the present disclosure or some methods in related technologies.

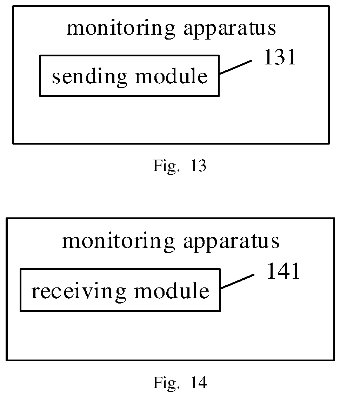

As shown in FIG. 13, a monitoring apparatus is provided in an embodiment of the present disclosure.

The apparatus includes: a sending module 131, configured to send configuration information for a first type of power saving signal to a terminal.

The configuration information is used for the terminal in a radio resource control (RRC) non-connected state to monitor the first type of power saving signal.

It should be noted, those skilled in the art can understand that the methods provided in the embodiments of the present disclosure may be performed alone or together with some methods in the embodiments of the present disclosure or some methods in related technologies.

As shown in FIG. 14, a monitoring apparatus is provided in an embodiment of the present disclosure.

The apparatus includes: a receiving module 141, configured to receive configuration information for a first type of power saving signal sent by a first access network device.

The configuration information is used for a terminal in a radio resource control (RRC) non-connected state to monitor the first type of power saving signal.

It should be noted, those skilled in the art can understand that the methods provided in the embodiments of the present disclosure may be performed alone or together with some methods in the embodiments of the present disclosure or some methods in related technologies.

An embodiment of the present disclosure provides a communication device, the communication device comprising:
a processor; and
a memory for storing executable instructions for the processor.

The processor is configured to, when running the executable instructions, implement the method in any embodiment of the present disclosure.

The processor may include various types of storage media, which are non-transistory computer storage media, and can continue to memorize the information stored thereon after the communication device loses power.

The processor may be connected to the memory through a bus or the like to read the executable program stored in the memory.

An embodiment of the present disclosure further provides a computer storage medium. The computer storage medium stores a computer executable program. When the executable program is executed by a processor, the method in any embodiment of the present disclosure is implemented.

Regarding the apparatus in the above embodiment(s), the specific implementations in which each module performs the respective operation have been described in detail in the embodiments of the respective method, and will not be elaborated here.

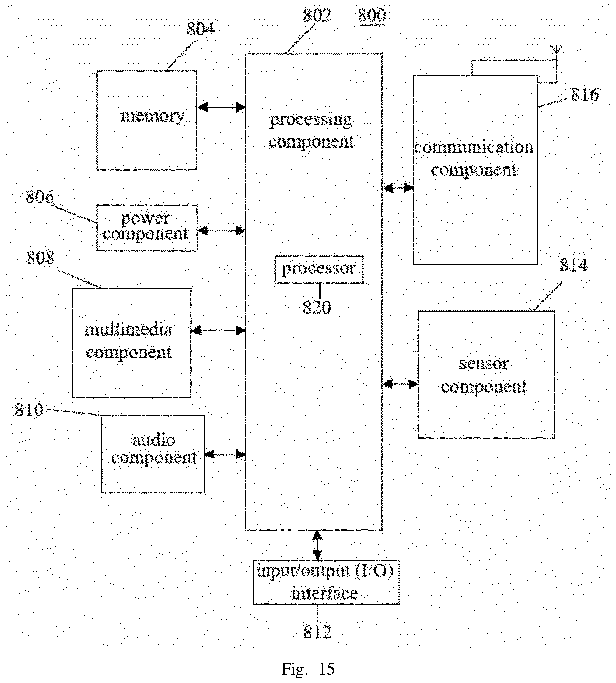

As shown in FIG. 15, an embodiment of the present disclosure provides a structure of a terminal.

Reference may be made to the terminal 800 shown in FIG. 15. The terminal 800 is provided by an embodiment of the present disclosure. The terminal 800 may be a mobile phone, a computer, a digital broadcast terminal, a messaging device, a game console, a tablet device, a medical device, a fitness device, a personal digital assistant, etc.

Referring to FIG. 15, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the terminal 800, such as operations associated with display, phone calls, data communications, camera operations, and recording operations. The processing component 802 may include one or more processors 820 to execute instructions, so that all or some of the steps in the above method(s) are accomplished. In addition, the processing component 802 may include one or more modules to facilitate interactions between the processing component 802 and other components. For example, the processing component 802 may include a multimedia module to facilitate interactions between the multimedia component 808 and the processing component 802.

The memory 804 is configured to store various types of data to support operations on the device 800. Examples of such data include instructions for any application or method operating on the terminal 800, contact data, phone book data, messages, pictures, videos, etc. The memory 804 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power component 806 provides power to various components of the terminal 800. The power component 806 may include a power management system, one or more power supplies, and other components associated with generating, managing and distributing power for the terminal 800.

The multimedia component 808 includes a screen that provides an output interface between the terminal 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor can sense not only the boundary of the touch or slide operation, but also the duration and pressure associated with the touch or slide operation. In some embodiments, the multimedia component 808 includes a front camera and/or a rear camera. When the device 800 is in an operation mode, such as a shooting mode or a video mode, the front camera and/or the rear camera may receive external multimedia data. Each of the front camera and the rear camera may be a fixed optical lens system or have a focal length and optical zooming capability.

The audio component 810 is configured to output and/or input audio signals. For example, the audio component 810 includes a microphone (MIC). When the terminal 800 is in an operation mode, such as a call mode, a recording mode, and a voice recognition mode, the microphone is configured to receive an external audio signal. The received audio signal may be further stored in the memory 804 or sent via the communication component 816. In some embodiments, the audio component 810 further includes a speaker for outputting audio signals.

The I/O interface 812 provides an interface between the processing component 802 and the peripheral interface module, which may be a keyboard, a click wheel, a button, etc. These buttons may include, but are not limited to, a home button, a volume button, a start button, and a lock button.

The sensor component 814 includes one or more sensors for providing various aspects of status assessment for the terminal 800. For example, the sensor component 814 may detect the on/off state of the device 800, the relative positioning among components, such as display and keypad of the terminal 800. The sensor component 814 may also detect the position change of the terminal 800 or a component of the terminal 800, the presence or absence of user contact with the terminal 800, the orientation or acceleration/deceleration of the terminal 800, and the temperature change of the terminal 800. The sensor component 814 may include a proximity sensor, which is configured to detect the presence of nearby objects without any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the terminal 800 and other devices. The terminal 800 may access a wireless network based on a communication standard, such as Wi-Fi, 2G, 3G, or a combination thereof. In an example embodiment, the communication component 816 receives a broadcast signal or broadcast-related information from an external broadcast management system via a broadcast channel. In an example embodiment, the communication component 816 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, or other technologies.

In an example embodiment, the terminal 800 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above method(s).

In an example embodiment, a non-transistory computer-readable storage medium including instructions is further provided, such as a memory 804 including instructions. The instructions may be executed by the processor 820 of the terminal 800 to complete the above method(s). For example, the non-transistory computer-readable storage medium may be a ROM, a random access memory (RAM), a CD-ROM, a tape, a floppy disk, and an optical data storage device, etc.

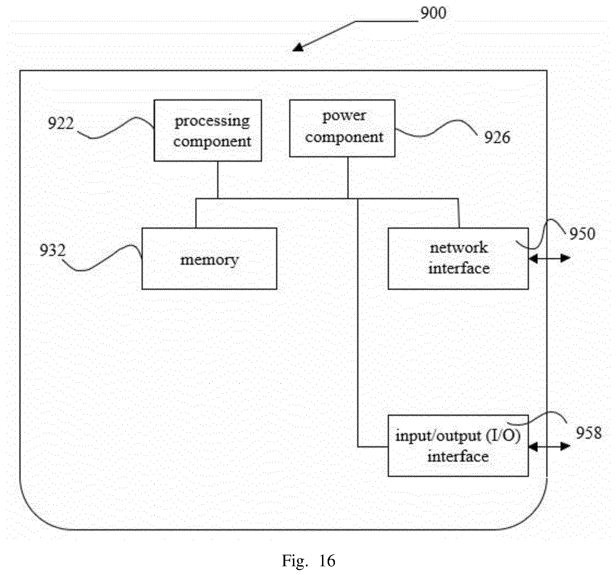

As shown in FIG. 16, an embodiment of the present disclosure shows a structure of a base station. For example, the base station 900 may be provided as a network side device. Referring to FIG. 16, the base station 900 includes: a processing component 922, which further includes one or more processors; and a memory resource represented by a memory 932, which is used for storing instructions executable by the processing component 922, such as an application. The application stored in the memory 932 may include one or more modules each corresponding to a set of instructions. In addition, the processing component 922 is configured to execute instructions, so that the above method(s) or any aforementioned method(s) applied to the base station are performed.

The base station 900 may also include: a power component 926 configured to perform power management for the base station 900; a wired or wireless network interface 950 configured to connect the base station 900 to a network; and an input/output (I/O) interface 958. The base station 900 may operate based on an operation system stored in the memory 932, such as Windows Server TM, Mac OS XTM, UnixTM, LinuxTM, FreeBSDTM, or the like.

Other embodiments of the present disclosure will be readily apparent to those skilled in the art after considering the specification and practicing the content disclosed herein. The present disclosure is intended to cover any variation, use or adaptation of the present disclosure that follows the general principle of the present disclosure and includes common knowledge or conventional technical means in the art that are not disclosed in the present disclosure. The description and embodiments are to be regarded as examples only, and the true scope and spirit of the present disclosure are indicated by the following claims.

It should be understood that the present disclosure is not limited to the precise structure described above and shown in the accompanying drawings, and various modifications and changes may be made without departing from its scope. The scope of the present disclosure is limited only by the appended claims.

## Claims

1. A monitoring method, performed by a first access network device and comprising:
sending configuration information for a first type of power saving signal to a terminal,
wherein the configuration information is used for the terminal in a Radio Resource Control (RRC) non-connected state to monitor the first type of power saving signal.

2. The method according to claim 1, further comprising:
receiving auxiliary information sent by the terminal, wherein
the auxiliary information indicates terminal capability; and
the auxiliary information is used for determining the configuration information.

3. The method according to claim 2, wherein the auxiliary information comprises at least one of:
information about whether the terminal supports the first type of power saving signal or not; or
offset information supported by the terminal, wherein the offset information indicates an offset value between a time for monitoring the first type of power saving signal and a predefined monitoring time.

4. The method according to claim 2, wherein receiving the auxiliary information sent by the terminal comprises:
receiving the auxiliary information sent through a terminal capability message; or
receiving the auxiliary information sent through an Uplink Auxiliary Information (UAI) message.

5. The method according to claim 2, further comprising:
sending the auxiliary information to a core network.

6. The method according to claim 5, wherein sending the auxiliary information to the core network comprises:
sending the auxiliary information to the core network through a release message for releasing the terminal; or
sending the auxiliary information to the core network through a notification message about terminal capability information.

7. The method according to claim 5, further comprising:
receiving the auxiliary information sent by the core network.

8. The method according to claim 7, wherein receiving the auxiliary information sent by the core network comprises:
receiving the auxiliary information sent by the core network through a paging message; or
receiving the auxiliary information sent by the core network through a terminal context message.

9. The method according to claim 5, further comprising:
sending the auxiliary information to a second access network device.

10. The method according to claim 9, wherein sending the auxiliary information to the second access network device comprises:
sending the auxiliary information to the second access network device through a radio paging message; or
sending the auxiliary information to the second access network device through a terminal context message.

11. The method according to claim 1, further comprising:
determining the configuration information, wherein
the configuration information comprises offset information for the terminal; and
the offset information indicates at least one offset value between a time for the terminal to monitor the first type of power saving signal and a predefined monitoring time.

12. The method according to claim 11, wherein the predefined monitoring time comprises at least one of a time for monitoring a second type of power saving signal or a time for monitoring paging data.

13. The method according to claim 11, wherein the offset value configured for the first type of power saving signal is different from the offset value configured for a second type of power saving signal.

14. A monitoring method, performed by a terminal and comprising:
receiving configuration information for a first type of power saving signal sent by a first access network device,
wherein the configuration information is used for the terminal in a Radio Resource Control (RRC) non-connected state to monitor the first type of power saving signal.

15. The method according to claim 14, further comprising:
sending auxiliary information to the first access network device, wherein
the auxiliary information indicates terminal capability; and
the auxiliary information is used for determining the configuration information.

16. The method according to claim 15, wherein the auxiliary information includes at least one of:
information about whether the terminal supports the first type of power saving signal or not; or
offset information supported by the terminal, wherein the offset information indicates an offset value between a time for monitoring the first type of power saving signal and a predefined monitoring time.

17. The method according to claim 15, wherein sending the auxiliary information to the first access network device comprises:
sending the auxiliary information to the first access network device through a terminal capability message; or
sending the auxiliary information to the first access network device through an Uplink Auxiliary Information (UAI) message.

18. The method according to claim 14, wherein
the configuration information comprises offset information for the terminal; and
the offset information indicates at least one offset value between a time for monitoring the first type of power saving signal and a predefined monitoring time.

19. The method according to claim 18, wherein the predefined monitoring time comprises a time for monitoring a second type of power saving signal and/or a time for monitoring paging data.

20. The method according to claim 18, wherein
the offset information indicates a first offset value; and
the method further comprises one of:
monitoring the first type of power saving signal based on the offset value indicated by the configuration information;
in response to the offset value supported by the terminal being less than or equal to the first offset value, monitoring the first type of power saving signal based on the first offset value;
in response to the offset value supported by the terminal being greater than the first offset value, monitoring a second type of power saving signal based on the offset value configured for the second type of power saving signal; or
in response to the offset value supported by the terminal being greater than the first offset value, monitoring downlink data.

21. The method according to claim 18, wherein
the offset information indicates a first offset value and a second offset value, the first offset value being less than or equal to the second offset value; and
the method further comprises one of:
in response to the offset value supported by the terminal being equal to the first offset value, monitoring the first type of power saving signal based on the first offset value;
in response to the offset value supported by the terminal being equal to the second offset value, monitoring the first type of power saving signal based on the second offset value;
in response to the offset value supported by the terminal being less than the first offset value, monitoring the first type of power saving signal based on the first offset value;
in response to the offset value supported by the terminal being greater than the first offset value and less than the second offset value, monitoring the first type of power saving signal based on the second offset value;
in response to the offset value supported by the terminal being greater than the first offset value and less than the second offset value, monitoring a second type of power saving signal based on the offset value configured for the second type of power saving signal;
in response to the offset value supported by the terminal being greater than the first offset value and less than the second offset value, monitoring downlink data;
in response to the offset value supported by the terminal being greater than the second offset value, monitoring the first type of power saving signal based on the first offset value;
in response to the offset value supported by the terminal being greater than the second offset value, monitoring the second type of power saving signal based on the offset value configured for the second type of power saving signal; or
in response to the offset value supported by the terminal being greater than the second offset value, monitoring the downlink data.

22. The method according to claim 18, wherein the offset value configured for the first type of power saving signal is different from the offset value configured for the second type of power saving signal.

23. The method according to claim 14, further comprising:
in response to the terminal being in a predetermined cell, monitoring the first type of power saving signal; or
in response to a paging cycle being greater than a cycle threshold, monitoring the first type of power saving signal.

24. A monitoring apparatus, comprising:
a sending module, configured to send configuration information for a first type of power saving signal to a terminal,
wherein the configuration information is used for the terminal in a Radio Resource Control (RRC) non-connected state to monitor the first type of power saving signal.

25. A monitoring apparatus, comprising:
a receiving module, configured to receive configuration information for a first type of power saving signal sent by a first access network device,
wherein the configuration information is used for a terminal in a Radio Resource Control (RRC) non-connected state to monitor the first type of power saving signal.

26. A communication device, comprising:
a memory; and
a processor, connected to the memory and configured to execute computer executable instructions stored on the memory for implementing the method according to any one of claims 1 to 13 or 14 to 23.

27. A computer storage medium, having computer executable instructions stored thereon, wherein the computer executable instructions, when being executed by a processor, implement the method according to any one of claims 1 to 13 or 14 to 23.
